# EUROPÄISCHE PATENTSCHRIFT

(11) **EP 1 736 797 B1**
(45) Veröffentlichungstag und Bekanntmachung des Hinweises auf die Patenterteilung: **09.04.2008**
(21) Anmeldenummer: 06113250.2
(22) Anmeldetag: 28.04.2006
(51) Int. Cl.: G01S 13/93, B60K 31/00

(54) **Fahrerassistenzsystem mit Navigationssystemschnittstelle**
Driver assistance system with navigation system interface
Système d'assistance du conducteur avec interface de système de navigation

(30) Priorität: 15.06.2005 DE 102005027655
(43) Veröffentlichungstag der Anmeldung: 27.12.2006
(73) Patentinhaber: ROBERT BOSCH GMBH, 70442 Stuttgart (DE)
(72) Erfinder: Schroeder, Carsten, 71272 Renningen (DE); Sparbert, Jan, 71272 Renningen (DE); Hagemann, Markus, 70839 Gerlingen (DE); Schwindt, Oliver, 71277 Rutesheim (DE)

(56) Entgegenhaltungen:
- EP-A- 0 775 921
- DE-A1- 10 004 525
- DE-A1- 10 030 932
- DE-A1- 10 254 806

## Beschreibung

### Stand der Technik

Die Erfindung betrifft ein Fahrerassistenzsystem mit einer Schnittstelle zu einem Navigationssystem.

Fahrerassistenzsysteme für Kraftfahrzeuge stellen verschiedene Assistenzfunktionen bereit, die den Fahrer bei der Führung des Fahrzeugs unterstützen und/oder ihn vor bevorstehenden Gefahren warnen. Ein einfaches Beispiel ist ein Tempomat, mit dem die Geschwindigkeit des Fahrzeugs auf eine vom Fahrer gewählte Wunschgeschwindigkeit geregelt wird. Eine Weiterbildung eines solchen Systems ist ein sogenanntes ACC-System (Adaptive Cruise Control), bei dem mit Hilfe eines Ortungssystems, beispielsweise eines Radarsystems, vorausfahrende Fahrzeuge auf der eigenen Spur geortet werden können und, sofern ein solches Fahrzeug vorhanden ist, automatisch eine Regelung des Abstands oder der Zeitlücke zu diesem Fahrzeug erfolgt. Weitere Beispiele für Fahrerassistenzsysteme und -funktionen sind Spurwechselassistenten oder Überholassistenten sowie im weiteren Sinne auch Sicherheitssysteme (Predictive Safety Systems; PSS), die dazu dienen, einen bevorstehenden Unfall abzuwenden oder zumindest die Unfallfolgen zu mildern.

Bei radargestützten ACC-Systemen kann es bei Fahrten in hügeligem oder bergigem Gelände vorkommen, daß das vorausfahrende Fahrzeug, das als Zielobjekt verfolgt wird, vorübergehend verloren geht, weil die Radarkeule vor einer Bergkuppe über das Zielobjekt hinweg streicht und dieses nicht mehr erfaßt oder beim Durchfahren einer Senke schon vor dem Zielobjekt auf die Fahrbahnoberfläche trifft. Ohne besondere Gegenmaßnahmen würde dies dazu führen, daß das Fahrzeug beschleunigt wird, bis die Wunschgeschwindigkeit erreicht ist oder das Zielobjekt wieder auftaucht. Diese Geschwindigkeitsänderung müßte dann wieder korrigiert werden, was zu einer ungleichmäßigen Fahrweise und damit zu einer Beeinträchtigung des Komforts und gegebenenfalls auch der Sicherheit führt.

Zur Lösung dieses Problems ist es bekannt, mit Hilfe eines im Fahrzeug eingebauten Neigungssensors das Höhenprofil des bereits befahrenen Fahrbahnabschnitts zu bestimmen und, wenn dieses Höhenprofil auf eine Bergkuppe oder Senke hinweist, die Beschleunigung bei Zielobjektverlust vorübergehend zu unterdrücken.

Aus DE 102 54 806 A1 ist ein System bekannt, das insbesondere zur automatischen Azimutwinkel- und Höhenverstellung der Fahrzeugscheinwerfer dient, um die Beleuchtung optimal an das jeweilige Fahrzeugumfeld anzupassen. Zur Erfassung des Umfelds werden dabei die Daten verschiedener Informationsquellen miteinander fusioniert und abgeglichen, damit eine möglichst zuverlässige Umfelderfassung erreicht wird. Zu den Informationsquellen gehören beispielsweise verschiedene Ortungssysteme wie etwa ein Radarsystem, ein Videosystem und dergleichen sowie auch ein Navigationssystem, das anhand einer digitalen Karte Informationen über den Fahrbahnverlauf bereitstellt, so daß Kurven frühzeitig erkannt und die Scheinwerfer entsprechend eingestellt werden können. Bei diesem System soll auch die vertikale Krümmung der Fahrbahn erfaßt werden, damit Kuppen und Senken besser ausgeleuchtet werden können.

Aus der EP 0 775 921 A1 ist eine Vorrichtung zur Abstandsbestimmung von Fahrzeugen, bekannt, bei der von einem Fahrzeug aus zwei Strahlenfächer, bestehend aus mehreren in einer Ebene verlaufenden Laserstrahlen, mit unterschiedlichem Elevationswinkel in Richtung eines anderen Fahrzeugs ausgesandt werden und die reflektierten Laserstrahlen empfangen werden. Dabei ist der in die gewünschte Entfernung gerichtete Strahlenfächer aktiviert und es wird der in die gewünschte Entfernung gerichtete Strahlenfächer für die Bestimmung der Entfernung mittels einer den Empfängern zugeordneten Auswerteschaltung dominant berücksichtigt, während der andere Strahlenfächer nicht oder mit deutlich geringerem Gewicht berücksichtigt wird.

Aus der DE 100 04 525 A1 ist ein Verfahren zur Regelung der Geschwindigkeit eines Kraftfahrzeuges und des Abstandes des Kraftfahrzeuges zu mindestens einem vorausfahrenden Kraftfahrzeug bekannt, bei dem die Geschwindigkeit des Kraftfahrzeuges sowie der Abstand zu dem vorausfahrenden Kraftfahrzeug bestimmt werden und bei einer Abweichung des erfassten Abstandes vom Folgesollabstand das Kraftfahrzeug abgebremst oder beschleunigt wird. Weiterhin wird mit Hilfe eines Navigationssystems der geographische Ort des Kraftfahrzeuges bestimmt, und es wird die Abstandsregelung in Abhängigkeit von der befahrenden Straße eingestellt, indem mit Hilfe der Daten des Navigationssystems die Art der befahrenen Straße bestimmt wird und zusätzlich in Abhängigkeit von der Art der befahrenen Straße die Parameter der Abstandsregelung eingestellt werden.

Aus der DE 100 30 932 A1 ist ein Verfahren zur Erzeugung, Prüfung, Ergänzung und Aktualisierung von Straßenkartendaten bekannt, indem während der Fahrt eines Fahrzeugs die aktuelle Fahrzeugposition über ein Positionsbestimmungssystem erfasst und in einem Speicher abgelegt wird. Aus dem Speicher können die gemessenen Trajektorien in mindestens eine Datenbank übertragen werden. Eine Datenverarbeitungseinheit wertet die gemessenen Positionsdaten aus und erzeugt, prüft, ergänzt oder aktualisiert hiermit eine digitalisierte Straßenkarte. Vorzugsweise werden in der Datenbank Positionsmessungen mehrerer Fahrzeuge zusammengeführt und dann einer statischen Auswertung unterzogen. Die überarbeitete Straßenkarte kann über einen Übertragungsweg einem Benutzer der Straßenkarte wieder zur Verfügung gestellt werden.

### Vorteile der Erfindung

Durch die Erfindung mit den Anspruch 1 angegebenen Merkmalen wird eine bessere Anpassung von Fahrerassistenzfunktionen an das Höhenprofil der Fahrbahn erreicht.

Es sind bereits Navigationssysteme verfügbar oder zumindest in Entwicklung, die neben Daten über den Fahrbahnverlauf auch Höhendaten zur Verfügung stellen, aus denen das Höhenprofil der Fahrbahn vorausschauend berechnet werden kann. Das erfindungsgemäße Fahrerassistenzsystem weist eine Einrichtung auf, die anhand der vom Navigationssystem über eine Schnittstelle bereitgestellten Höhendaten prädiktiv das Höhenprofil der Fahrbahn bestimmt. Assistenzfunktionen, die in irgendeiner Weise durch das Höhenprofil beeinflußt werden, können somit bereits vorausschauend an das jeweilige Höhenprofil angepaßt werden.

Vorteilhafte Ausgestaltungen der Erfindung sind in den Unteransprüchen angegeben.

Das Höhenprofil kann sich in vielfältiger Weise auf die Ausführung von Assistenzfunktionen verschiedenster Art auswirken. Beispielsweise kann es bei der Abstandsregelung zweckmäßig sein, bei einer bevorstehenden Gefällstrecke den Sollabstand oder die Zeitlücke zum vorausfahrenden Fahrzeug zu vergrößern, um dem längeren Bremsweg Rechnung zu tragen. Zweckmäßig ist auch eine Anpassung der Wunschgeschwindigkeit oder Sollgeschwindigkeit beim Überfahren von Bergkuppen oder beim Durchfahren von Senken, damit die in diesen Situationen auftretenden Vertikalbeschleunigungen so begrenzt werden, daß sie von den Fahrzeuginsassen nicht als unangenehm empfunden werden und/oder daß, gegebenenfalls abhängig vom Straßenzustand, eine ausreichende Fahrbahnhaftung gewährleistet bleibt.

Ebenso ermöglicht die Erfindung ein verbessertes Verhalten eines ACC-Systems bei vorübergehendem Zielobjektverlust, da die Wahrscheinlichkeit für einen durch Kuppen oder Senken bedingten Zielobjektverlust bereits im voraus erkannt werden kann, so daß die Daten des Radarsensors besser und schneller interpretiert werden können.

Das Höhenprofil der Fahrbahn hat auch einen erheblichen Einfluß auf die Auftrittswahrscheinlichkeit von sogenannten Scheinobjekten oder Geisterobjekten. Solche Objekte entstehen durch Fehlinterpretationen oder Störsignale in den Daten, die vom Ortungssystem oder den Ortungssystemen geliefert werden. Sie repräsentieren daher keine echten Hindernisse und können somit zu Fehlreaktionen des Assistenzsystems führen. Dadurch kann es nicht nur zu einer Beeinträchtigung des Komforts, sondern auch zu einer Beeinträchtigung der Fahrsicherheit kommen. Vor allem bei Sicherheitssystemen (PSS), die zur Abwendung einer vermeintlich bevorstehenden Kollision massiv in die Fahrzeugführung eingreifen, etwa durch eine Vollbremsung, ist deshalb die Eliminierung von Scheinobjekten von großer Bedeutung. Wenn das Höhlenprofil der Fahrbahn rechtzeitig bekannt ist, läßt sich frühzeitiger und verläßlicher entscheiden, ob es sich bei einem georteten Objekt um ein echtes Hindernis oder nur um ein Scheinhindernis handelt, das etwa dadurch entsteht, daß der Ortungsbereich des Ortungssystems oder der Ortungssysteme vor einer Kuppe oder Senke eine anomale Elevation zur Fahrbahnoberfläche aufweist.

Während bei den bisher im Einsatz befindlichen ACC-Systemen im allgemeinen nur bewegliche Objekte als relevante Hindernisse in Betracht gezogen werden, sind fortgeschrittene Assistenzsysteme in Entwicklung, die auch bei niedriger Geschwindigkeit und sogar im Stadtverkehr eingesetzt werden können und es unter anderem auch ermöglichen, das eigene Fahrzeug automatisch in den Stillstand zu bremsen, wenn das vorausfahrende Fahrzeug anhält, etwa beim Auffahren auf ein Stauende. In diesem Fall müssen naturgemäß auch ruhende Objekte in die Auswertung einbezogen und als möglicherweise relevante Hindernisse in Betracht gezogen werden. Bei den Scheinobjekten, die durch eine anormale Elevation des Ortungssystems hervorgerufen werden, wird es sich oft um ruhende Objekte handeln, beispielsweise um Kanaldeckel oder kleinere Gegenstände auf der Fahrbahn oder um Brückenkonstruktionen oberhalb der Fahrbahn. Bei den fortgeschrittenen ACC-Systemen erweist sich daher die durch die Erfindung geschaffene Möglichkeit, solche Scheinobjekte zu eliminieren, als besonders vorteilhaft.

Die Liste der hier beschriebenen Anwendungsmöglichkeiten der Erfindung ist nicht abschließend. Beispielsweise kann die Erfindung auch in Verbindung mit Spurwechselassistenten eingesetzt werden. Wenn das Ortungssystem ein Videosystem aufweist oder auf andere Weise in der Lage ist, zwischen LKW und PKW zu unterscheiden, kann bei Fahrten auf der langsamen Spur einer Autobahn vor einer Steigungsstrecke rechtzeitig eine Spurwechselempfehlung ausgegeben werden, da absehbar ist, daß ein LKW auf der Steigungsstrecke erheblich langsamer werden wird. Auf Landstraßen mit Gegenverkehr ist etwa eine Warnfunktion denkbar, die den Fahrer bei einem Ansatz zu einem Überholinanöver warnt, wenn der Gegenverkehr wegen einer Kuppe oder Senke nicht vollständig eingesehen werden kann.

### Zeichnung

Ein Ausführungsbeispiel der Erfindung ist in den Zeichnungen dargestellt und in der nachfolgenden Beschreibung näher erläutert.

### Es zeigen:

Figur 1 ein Blockdiagramm eines erfindungsgemäßen Fahrerassistenzsystems; und

Figuren 2 bis 7 Skizzen zur Illustration der Arbeitsweise des Systems in unterschiedlichen Situationen.

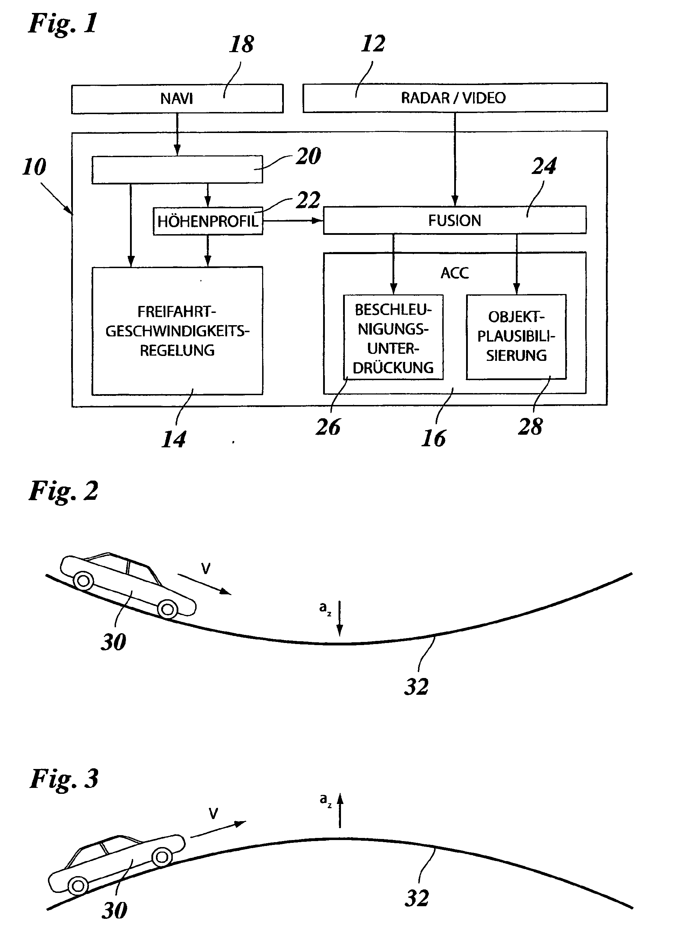

In Figur 1 ist als Beispiel für ein Fahrerassistenzsystem ein ACC-System 10 dargestellt, dem ein Sensorsystem 12 zur Erfassung des Verkehrsumfelds zugeordnet ist. Das Sensorsystem umfaßt mindestens einen Radarsensor, soll im gezeigten Beispiel jedoch zusätzlich auch ein Videosystem umfassen. Der Aufbau und die Arbeitsweise des ACC-Systems sind als solche bekannt, und die grundlegenden Funktionen, nämlich die Geschwindigkeitsregelung in Freifahrt, also die Regelung auf die Wunschgeschwindigkeit, wenn kein vorausfahrendes Fahrzeug vorhanden ist, und die eigentliche Abstandsregelung (ACC), sind hier lediglich als Funktionsblöcke 14, 16 dargestellt. In der Praxis werden diese Funktionen wie auch die übrigen hier beschriebenen Funktionen von einem geeignet programmierten elektronischen Datenverarbeitungssystem ausgeführt.

Das Fahrzeug, in das das ACC-System 10 eingebaut ist, soll außerdem ein fortgeschrittenes Navigationssystem 18 aufweisen, das in der Lage ist, Höhendaten über die in einer digitalen Karte gespeicherten Straßen bereit zu stellen. Das ACC-System 10 kommuniziert über eine Schnittstelle 20 mit dem Navigationssystem 18, so daß beispielsweise im Rahmen der Geschwindigkeitsregelung in Freifahrt auch die Daten über den Straßenverlauf ausgewertet werden können und somit vor engen Kurven die Geschwindigkeit des Fahrzeugs geeignet angepaßt werden kann.

Das ACC-System 10 weist außerdem eine Einrichtung 22 auf, die aus den vom Navigationssystem bereitgestellten Höhendaten und anhand der Information über den aktuellen Ort des Fahrzeugs ein Höhenprofil für den derzeit befahrenen und den unmittelbar vorausliegenden Streckenabschnitt berechnet. Diese Daten über das Höhenprofil fließen zum einen in die Geschwindigkeitsregelung im Freifahrtrnodus (Block 14) ein und werden zum anderen in einem Fusionsmodul 24 mit den Ortungsdaten der vom Ortungssystem 12 georteten Objekte fusioniert.

In diesem Fusionsmodul werden auch die von den Teilsystemen des Ortungssystems gelieferten Daten, also einerseits die Daten des Radarsystems und andererseits die Daten des Videosystems miteinander fusioniert. Auch die vom Navigationssystem 18 gelieferten Daten über den Fahrbahnverlauf, also insbesondere die horizontale Fahrbahnkrümmung, werden bei der Datenfusion berücksichtigt, obgleich dies in der Zeichnung nicht besonders dargestellt ist.

Mit "Datenfusion" ist hier gemeint, daß die aus den verschiedenen Informationsquellen erhaltenen Daten über geortete Objekte zueinander in Beziehung gesetzt und miteinander abgeglichen werden, so daß man vollständigere Informationen über das jeweilige Objekt erhält und anhand der mehr oder minder großen Konsistenz dieser Informationen auch Aufschlüsse über die Verläßlichkeit der Daten gewinnt. Der Hintergrund ist, daß die verschiedenen Informationsquellen jeweils ihre spezifischen Stärken und Schwächen haben und daß durch die Datenfusion die jeweiligen Schwächen zumindest teilweise kompensiert werden können. So liefert z. B. das Videosystem relativ genaue Objektdaten in vertikaler Richtung aber nur ungenaue Objektdaten in Fahrzeuglängssrichtung (Objektabstand, Relativgeschwindigkeit), insbesondere bei Mono-Videosystemen. Beim Radarsystem ist es gerade umgekehrt, so daß sich die Informationen bei der Datenfusion sinnvoll ergänzen. Soweit die verschiedenen Informationsquellen Daten über ein und dieselbe physikalische Größe liefern, beispielsweise den Abstand eines Objekts, gibt es für jede Informationsquelle spezifische Fehlergrenzen, die von den Bedingungen abhängig sind, unter denen die Information gewonnen wurde. Die Genauigkeit der Bestimmung der jeweiligen Größe läßt sich dann dadurch verbessern, daß ein gewichteter Mittelwert der Daten aus den verschiedenen Informationsquellen gebildet wird, wobei die Informationsquelle mit den engsten Fehlertoleranzen am höchsten gewichtet wird. Das Ausmaß der Übereinstimmung oder Abweichung zwischen den Daten aus den verschiedenen Quellen gibt außerdem Auskunft über die Genauigkeit oder Verläßlichkeit, mit der die betreffende Größe unter Berücksichtigung aller verfügbaren Informationsquellen bestimmt werden kann. Wenn auch die Daten über den Fahrbahnverlauf oder die horizontale Fahrbahnkrümmung in die Fusion mit einbezogen werden, läßt sich Kursprädiktion und damit die Genauigkeit verbessern, mit der bestimmt werden kann, ob sich die Objekte neben der Fahrbahn oder auf der Fahrbahn befinden und, im letzteren Fall, auf welcher Fahrspur sie sich befinden. Beispiele für Datenfusionen dieser Art werden in DE 102 54 806 A1 beschrieben.

Durch die Fusion mit den Daten über das Höhenprofil läßt sich näher bestimmen, welche Lage die Ortungsbereiche der verschiedenen Ortungssysteme in vertikaler Richtung in bezug auf die Fahrbahn einnehmen und/oder in welcher Höhe sich die georteten Objekte in bezug auf die Fahrbahnoberfläche befinden. Auf diese Weise lassen sich zum einen gewisse Beschränkungen der Ortungssysteme erkennen, die daraus resultieren, daß bestimmte Teilstücke des vorausliegenden Fahrbahnabschnitts aufgrund des speziellen Höhenprofils nicht eingesehen werden können, was bei der Abstandsregelung zu einem vorübergehenden Zielobjektverlust führen kann. Zum anderen läßt sich genauer entscheiden, ob es sich bei dem georteten Objekt um ein größeres Objekt, beispielsweise ein Fahrzeug, auf der Fahrbahn handelt oder aber um ein irrelevantes kleines Objekt auf der Fahrbahnoberfläche, etwa einen Kanaldeckel, eine Blechdose oder dergleichen oder beispielsweise um einen Teil einer Brückenkonstruktion weit oberhalb der Fahrbahn. Somit wird die Interpretation der Ortungsdaten in Bezug auf die Existenzwahrscheinlichkeit des Objekts, die sogenannte Objektplausibilisierung, deutlich verbessert.

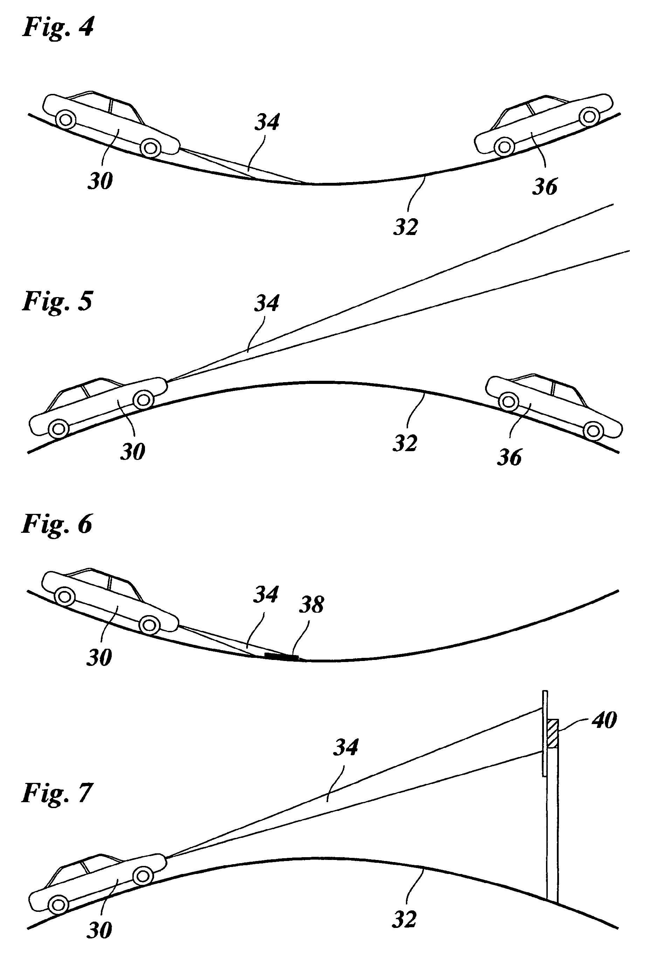

Die Fusion mit den Daten über das Höhenprofil hat somit insbesondere Einfluß zwei Teilfunktionen des ACC-Systems, die in Figur 1 als Funktionsblöcke 26 und 28 dargestellt sind, nämlich die Beschleunigungsunterdrückung bei Zielobjektverlust und die Objektplausibilisierung. Dies wird weiter unten anhand der Figuren 4 bis 7 näher erläutert werden.

Figuren 2 und 3 illustrieren den Einfluß des Höhenprofils auf die Geschwindigkeitsregelung in Freifahrt. In der in Figur 2 gezeigten Situation fährt das mit dem ACC-System 10 ausgerüstete Fahrzeug 30 mit der Geschwindigkeit V in eine Senke ein, d. h., die Fahrbahn 32 unmittelbar vor dem Fahrzeug 30 weist eine positive vertikale Krümmung auf. Aus dieser Krümmung, die anhand des Höhenprofils berechnet werden kann, und aus der ebenfalls bekannten Geschwindigkeit V des Fahrzeugs läßt sich die (in diesem Fall nach unten gerichtete) Vertikalbeschleunigung a_{Z} berechnen, die die Fahrzeuginsassen beim Durchfahren der Senke erfahren. Eine solche Vertikalbeschleunigung wird, wenn ihr Betrag oberhalb eines bestimmten Schwellenwertes liegt, von den Fahrzeuginsassen als unangenehm empfunden. Zur Verbesserung des Fahrkomforts ist deshalb der Geschwindigkeitsregler im ACC-System so ausgelegt, daß in einer solchen Situation die Sollgeschwindigkeit für die Geschwindigkeitsregelung (abweichend von der vom Fahrer gewählten Wunschgeschwindigkeit) so verringert wird, daß die Vertikalbeschleunigung innerhalb der Komfortgrenzen bleibt. Dadurch wird zugleich, insbesondere auf kurvenreichen Strecken, auch eine Verbesserung der Fahrstabilität des Fahrzeugs erreicht. Gemäß einer Weiterbildung kann die prädizierte Vertikalbeschleunigung a_{Z} auch an ein im Fahrzeug vorhandenes elektronisches Stabilitätssystem (ESP) und/oder an aktive Stoßdämpfer des Fahrzeugs gemeldet werden, damit diese Fahrzeugsysteme besser an die aktuelle Situation angepaßt werden können.

Figur 3 illustriert in analoger Weise die Situation beim Überfahren einer Kuppe. In diesem Fall erfahren das Fahrzeug 30 und die Fahrzeuginsassen eine nach oben gerichtete Vertikalbeschleunigung a_{Z}, die nicht nur den Komfort beeinträchtigt, sondern auch zu einer verminderten Bodenhaftung des Fahrzeugs führt. Der Grenzwert für die Vertikalbeschleunigung und damit die Anpassung der Sollgeschwindigkeit werden hier so festgelegt, daß nicht nur ein hoher Fahrkomfort, sondern auch eine stets ausreichende Haftung der Reifen auf der Fahrbahn sichergestellt wird. Dabei kann gegebenenfalls auch der aktuelle Straßenzustand berücksichtigt werden (z.B. anhand der im ESP-System verfügbaren Daten über den Reibungskoeffizienten der Fahrbahn). Ebenso läßt sich beispielsweise berücksichtigen, daß bei starkem Regen (feststellbar anhand des Zustands des Scheibenwischers oder mit Hilfe eines Regensensors) sowohl in der Situation nach Figur 2 als auch in der Situation nach Figur 3 eine erhöhte Aquaplaninggefahr besteht, in Figur 2 deshalb, weil sich das Wasser in der Senke sammelt, und in Figur 3 wegen der verminderten Bodenhaftung.

Wenn die vom Navigationssystem 18 bereitgestellten Höhendaten auch Auskunft darüber geben, ob sich das Fahrzeug vor einer Talbrücke befindet, kann ebenfalls die Sollgeschwindigkeit vorübergehend gesenkt werden, um der auf solchen Brücken erhöhten Seitenwindgefahr oder Glatteisgefahr (bei entsprechender Außentemperatur) Rechnung zu tragen.

Figuren 4 und 5 illustrieren die Bedeutung des Höhenprofils bei der Teilfunktion "Beschleunigungsunterdrückung bei Zielobjektverlust" (Block 26 in Figur 1). In Figur 4 durchfährt das Fahrzeug 30 wieder eine Senke. Außerdem ist hier schematisch die Radarkeule 34 des zum Ortungssystems 12 gehörenden Radarsensors eingezeichnet. Im Rahmen der ACC-Abstandsregelung wird ein vorausfahrendes Fahrzeug, das Zielobjekt 36, in einem geeigneten Sicherheitsabstand verfolgt. Aufgrund der starken Krümmung der Fahrbahn 32 trifft die Radarkeule 34 jedoch schon vor dem Zielobjekt 36 auf die Fahroberfläche, so daß das Zielobjekt vorübergehend aus dem Ortungsbereich verloren geht. Für das ACC-System ist in dieser Situation nicht ohne weiteres erkennbar, ob es nur um einen vorübergehenden Zielobjektverlust handelt, oder ab das Zielobjekt tatsächlich und dauerhaft die Fahrbahn verlassen hat, so daß wieder auf die ursprünglich eingestellte Wunschgeschwindigkeit beschleunigt werden könnte. Auch die mit Hilfe eines Neigungssensors im Fahrzeug 30 feststellbare Fahrbahnneigung unmittelbar am Ort des Fahrzeugs 30 ermöglicht es nicht, diese Frage zu entscheiden. Erst durch Prädiktion des Höhenprofils und damit der Fahrbahnkrümmung anhand der Höhendaten des Navigationssystems 18 läßt sich erkennen, daß es sich hier nur um einen vorübergehenden, durch die Fahrbahnkrümmung verursachten Zielobjektverlust handelt, und demgemäß wird in dieser Situation die Beschleunigung des Fahrzeugs 30 unterdrückt.

Figur 5 illustriert in analoger Weise die Situation beim Überfahren einer Kuppe. Hier kommt es deshalb zu einem vorübergehenden Zielobjektverlust, weil die Radarkeule 34 über das Zielobjekt 36 hinweg streicht.

In den in Figuren 4 und 5 gezeigten Situationen kann ggf. auch eine aktive Anpassung der Radarkeule 34 an das Höhenprofil erfolgen, etwa durch Verschwenken des Radarsensors oder durch elektronische Änderung der Richtcharakteristik der Radarantenne. Insbesondere in der in Figur 5 gezeigten Situation kann außerdem auch in einer Freifahrtsituation eine vorübergehende Absenkung der Sollgeschwindigkeit erfolgen, um z.B. der Möglichkeit Rechnung zu tragen, daß hinter der Kuppe ein nicht einsehbares Stauende liegt. Diese Funktion läßt sich beispielsweise dann aktivieren, wenn durch ein (beispielsweise im Navigationssystem 18 enthaltenes) Staumeldesystem eine erhöhte Staugefahr für den betreffenden Streckenabschnitt gemeldet wird.

In Figuren 6 und 7 ist an Beispielen illustriert, wie durch die Prädiktion des Höhenprofils die Objektplausibilisierung (Block 28 in Figur 1) verbessert wird. In Figur 6 fährt das Fahrzeug 30 wieder in eine Senke ein, und die Radarkeule 34 trifft auf die Fahrbahnoberfläche, so daß das Radarsignal an Fahrbahnunebenheiten oder einem kleinen, auf der Fahrbahn liegenden Objekt 38, z.B. einem Kanaldeckel, reflektiert werden kann.

Bei Assistenzsystemen, die funktionsbedingt auch auf ruhende Objekte reagieren müssen, könnte es zu folgenreichen Fehlreaktionen führen, wenn das Objekt 38 fälschlich als ein echtes Hindernis interpretiert wird insbesondere bei Sicherheitssystemen, die eine automatische Vollbremsung einleiten. Durch Auswertung des bekannten Höhenprofils läßt sich das Objekt 38 jedoch leicht als Scheinobjekt charakterisieren.

In Figur 7 überfährt das Fahrzeug 30 eine Kuppe, und ein Scheinobjekt 40 wird in diesem Fall durch eine über der Fahrbahn montierte Schilderbrücke gebildet, die aufgrund der vertikalen Fahrbahnkrümmung von der Radarkeule 34 erfaßt wird.

## Patentansprüche

1. Fahrerassistenzsystem mit einer Schnittstelle (20) zu einem Navigationssystem (18), das eine Einrichtung (22) zur Prädiktion eines Höhenprofils der Fahrbahn anhand der Daten des Navigationssystems aufweist und dazu ausgebildet ist, eine Assistenzfunktion (14, 16) in Abhängigkeit vom prädizierten Höhenprofil auszuführen wobei die Assistenzfunktion eine Funktion (14) zur Regelung der Fahrgeschwindigkeit auf eine Sollgeschwindigkeit umfaßt und daß das Fahrerassistenzsystem dazu ausgebildet ist, die Sollgeschwindigkeit in Abhängigkeit vom prädizierten Höhenprofil zu variieren, **dadurch gekennzeichnet, daß** ein Kriterium für die Bestimmung der Sollgeschwindigkeit darin besteht, daß eine Vertikalbeschleunigung (a_{Z}) des Fahrzeugs, die durch die sich aus dem prädizierten Höhenprofil ergebende vertikale Fahrbahnkrümmung und die Geschwindigkeit (V) des Fahrzeugs (30) bestimmt ist, innerhalb vorgegebener Grenzen bleibt.

2. Fahrerassistenzsystem nach Anspruch 1, **dadurch gekennzeichnet, daß** die Assistenzfunktion eine Abstandsregelfunktion (16) umfaßt, mit der der Abstand des Fahrzeugs (30) zu einem vorausfahrenden Zielobjekt (36) geregelt wird, und daß das Fahrerassistenzsystem dazu ausgebildet ist, anhand des prädizierten Höhenprofils einen bevorstehenden, durch das Höhenprofil der Fahrbahn verursachten Zielobjektverlust zu erkennen und bei einem solchen Zielobjektverlust eine Beschleunigung des Fahrzeugs (30) zu unterdrücken.

3. Fahrerassistenzsystem nach einem der vorstehenden Ansprüche, **dadurch gekennzeichnet, daß** die Assistenzfunktion (16) eine Teilfunktion (28) zur Plausibilisierung von mit einem Ortungssystem (12) georteten Objekten aufweist und daß die Objektplausibilisierung vom prädizierten Höhenprofil abhängig ist.

4. Fahrerassistenzsystem nach einem der vorstehenden Ansprüche; **gekennzeichnet durch** ein Fusionsmodul (24) zur Fusion von Daten, die das Höhenprofil repräsentieren, mit Daten aus anderen Informationsquellen, einschließlich der Daten eines Ortungssystems (12) zur Erfassung des Verkehrsumfelds.

## Claims

1. Driver assistance system having an interface (20) with a navigation system (18) which has a device (22) for predicting an altitude profile of the carriageway by means of the data of the navigation system, and is designed to execute an assistance function (14, 16) as a function of the predicted altitude profile, wherein the assistance function comprises a function (14) for adjusting the velocity to a setpoint velocity, and in that the driver assistance system is designed to vary the setpoint velocity as a function of the predicted altitude profile, **characterized in that** a criterion for the determination of the setpoint velocity consists in the fact that a vertical acceleration (a_{z}) of the vehicle, which is determined by the vertical bend in the carriageway resulting from the predicted altitude profile and the velocity (V) of the vehicle (30) remains within predefined limits.

2. Driver assistance system according to Claim 1, **characterized in that** the assistance function comprises an inter-vehicle distance control function (16) with which the distance between the vehicle (30) and the target object (36) travelling ahead is adjusted, and **in that** the driver assistance system is designed to detect, by reference to the predictive altitude profile, an imminent loss of target object caused by the altitude profile of the carriageway, and to suppress acceleration of the vehicle (30) in the event of such a loss of target object.

3. Driver assistance system according to one of the preceding claims, **characterized in that** the assistance function (16) has a subfunction (28) for checking the plausibility of objects whose location is found with a locating system (12), and **in that** the plausibility checking of the object is dependent on the predicted altitude profile.

4. Driver assistance system according to one of the preceding claims, **characterized by** a merging module (24) for merging data which represents the altitude profile with data from other information sources, including the data from a locating system (12) in order to register the traffic surroundings.

## Revendications

1. Système d'assistance de conduite comportant une interface (20) avec un système de navigation (18), ayant une installation (28) pour prévoir un profil d'altitude de la chaussée à l'aide des données du système de navigation et pour effectuer une fonction d'assistance (14, 16) selon le profil d'altitude prévisionnel, la fonction d'assistance comprenant une fonction (14) de la régulation de la vitesse de déplacement sur une vitesse de consigne et
le système d'assistance de conduite est réalisé pour varier la vitesse de consigne en fonction du profil d'altitude prévisionnel,
**caractérisé en ce qu'**
un critère pour déterminer la vitesse de consigne consiste à maintenir l'accélération verticale (a_{z}) du véhicule dans des limites prédéfinies, cette accélération étant déterminée à partir de la courbure verticale de la chaussée résultant du profil d'altitude prévisionnel et de la vitesse (V) du véhicule (30).

2. Système d'assistance de conduite selon la revendication 1,
**caractérisé en ce que**
la fonction d'assistance comprend une fonction de régulation de distance (16) régulant la distance du véhicule (30) par rapport à un objet cible (36) circulant en amont et
le système d'assistance de conduite est réalisé pour reconnaître, à l'aide du profil d'altitude prévisionnel, la perte d'un objet cible, en amont, perte occasionnée par le profil d'altitude de la chaussée et pour neutraliser l'accélération du véhicule (30) en cas de cette perte de l'objet cible.

3. Système d'assistance de conduite selon l'une des revendications précédentes,
**caractérisé en ce que**
la fonction d'assistance (16) comprend une fonction partielle (28) pour rendre plausibles les objets localisés par un système de localisation (12) et
la vérification de plausibilité de l'objet dépend du profil d'altitude prévisionnel.

4. Système d'assistance de conduite selon l'une des revendications précédentes,
**caractérisé par**
un module de fusion (24) pour fusionner les données représentant le profil d'altitude avec les données d'autres sources d'informations y compris les données d'un système de localisation (12) pour saisir l'environnement de circulation.
